# EUROPEAN PATENT APPLICATION

(11) **EP 4 316 877 A1**
(43) Date of publication of application: **07.02.2024**
(21) Application number: 22188149.3
(22) Date of filing: 01.08.2022
(51) Int. Cl.: B60H 1/00, B60H 1/32

(54) **REFRIGERANT MODULE FOR THERMAL MANAGEMENT SYSTEM**

(71) Applicant: VALEO SYSTEMES THERMIQUES, 78320 Le Mesnil Saint-Denis (FR)
(72) Inventor: FIENE, Andreas, 96476 Bad Rodach (DE); HEDAOO, Satyam, 600130 Chennai (IN)
(74) Representative: Valeo Systèmes Thermiques

(57) **Abstract**

The invention is about refrigerant module for a thermal management system, comprising a refrigerant unit, called first refrigerant unit (RU-1), of two opposite plates (2-1, 3-1) shaped to constitute channels for distributing refrigerant fluid in said thermal management system, the refrigerant module (1) comprising at least one bracket (50-1, 50-2) fixed to the refrigerant unit (RU-1) and provided with at least one decoupling element (51).

## Description

This disclosure relates to a refrigerant module for a thermal management system.

### Background Art

The development of electric vehicles has brought new issues to the automotive field, in particular in view of the limited autonomy of the electric battery as well as the limited space that can be dedicated to the thermal management system at the bottom of the vehicle. For these reasons, it is more and more searched for compact and light thermal management systems.

### Summary

This disclosure improves the situation.

It is proposed a refrigerant module for a thermal management system, comprising a refrigerant unit, called first refrigerant unit, of two opposite plates shaped to constitute channels for distributing refrigerant fluid in said thermal management system, the refrigerant module comprising at least one bracket fixed to the refrigerant unit and provided with at least one decoupling element.

Thanks to the decoupling element, the refrigerant module is isolated from the vehicle body vibrationally and acoustically, which improves the comfort of the vehicle users.

In another aspect, the refrigerant unit and the at least one bracket are configured to form a unit frame of the thermal management system. The refrigerant unit and the at least one bracket comprise fixation organs to connect components of the thermal management system such that the refrigerant unit and the at least one bracket form a unit frame.

In another aspect, the at least one bracket is fixed to one of the two opposite plates.

In another aspect, the refrigerant module comprises two brackets, at least one of the brackets provided with at least one decoupling element.

In another aspect, the refrigerant module comprises three brackets, at least one of the brackets provided with at least one decoupling element.

In another aspect, the refrigerant module comprises another refrigerant unit, called second refrigerant unit, the second refrigerant unit comprising two opposite plates for distributing refrigerant fluid in said thermal management system, the first refrigerant unit and the second refrigerant unit being fixed together.

In another aspect, the second refrigerant unit is in contact with one bracket.

In another aspect, the second refrigerant unit is disposed inclined relatively to the first refrigerant unit, the angle between the first refrigerant unit and the second refrigerant unit being comprised in a range of values of 45° to 110°.

In another aspect, the angle between the first refrigerant unit and the second refrigerant unit is 90°.

In another aspect, the second refrigerant unit comprises an interface configured to be fluidly connected to the first refrigerant unit.

In another aspect, the interface comprises at least one opening for the refrigerant fluid to flow from one of the first and second refrigerant units to the other of the first and second refrigerant units.

In another aspect, the interface comprises a rod resting against a back plate of the first refrigerant unit.

In another aspect, the first refrigerant unit and the second refrigerant unit are fixed together via the interface.

In another aspect, the first refrigerant unit and each bracket are screwed together.

In another aspect, the first refrigerant unit and each bracket are brazed together.

The invention also related to a thermal management system comprising a refrigerant module as described above.

In another aspect, the thermal management system further comprises a fluid source in fluid communication with and attached to the refrigerant module, the fluid source including at least one of a condenser, a chiller, a receiver-drier, a compressor or a coolant container.

### Brief Description of Drawings

Other features, details and advantages will be shown in the following detailed description and on the figures, on which:
**Fig. 1**

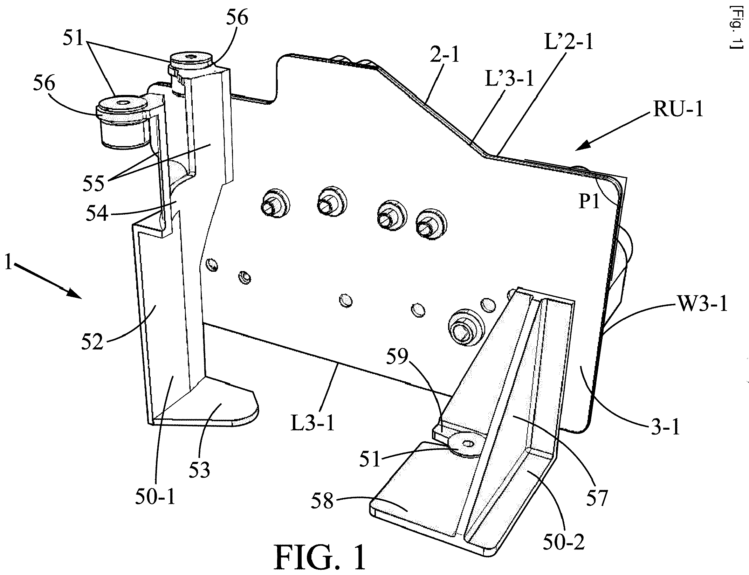

   [Fig. 1] is a perspective view of a bottom of a refrigerant module according to an embodiment of the present disclosure.
**Fig. 2**

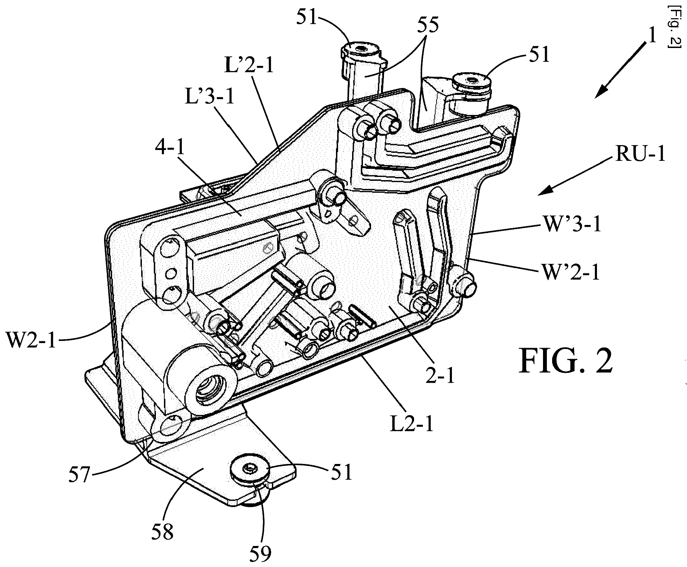

   [Fig. 2] is a perspective view of a top of the refrigerant module of figure 1.
**Fig. 3**

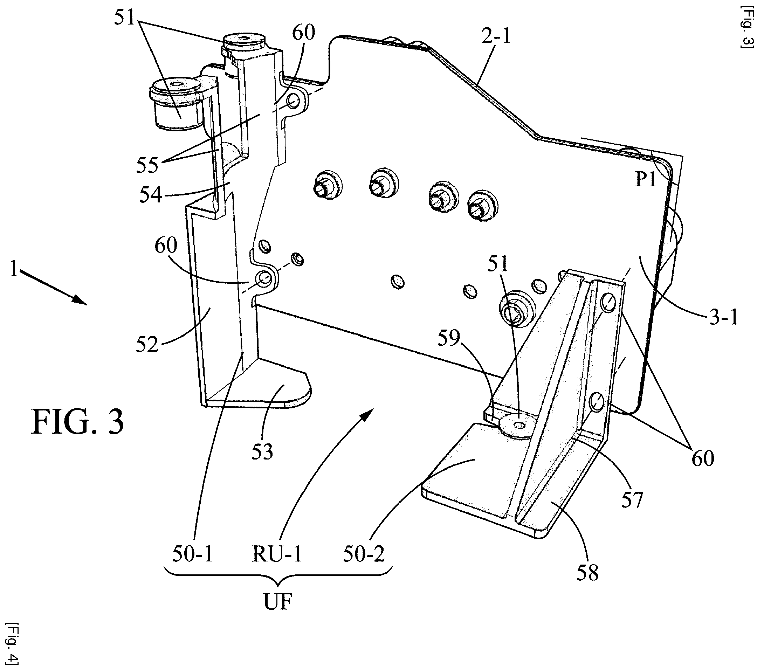

   [Fig. 3] is a perspective view of the bottom of the refrigerant module of figure 1 according to a first alternative.
**Fig. 4**

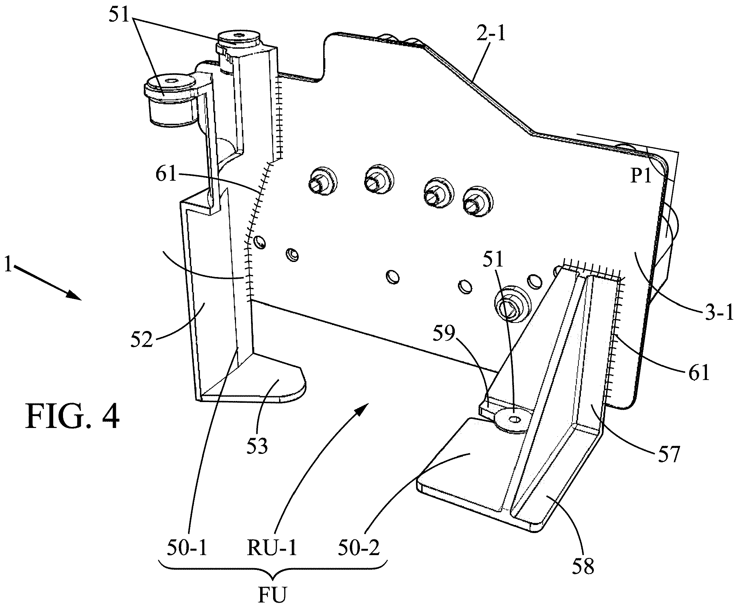

   [Fig. 4] is a perspective view of the bottom of the refrigerant module of figure 1 according to a second alternative.
**Fig. 5**

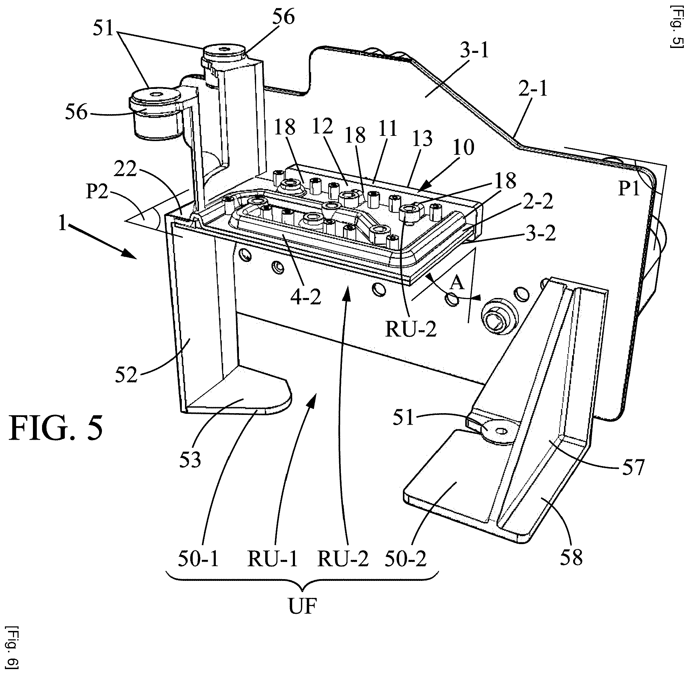

   [Fig. 5] is a perspective view of a bottom of a refrigerant module according to another embodiment of the present disclosure.
**Fig. 6**

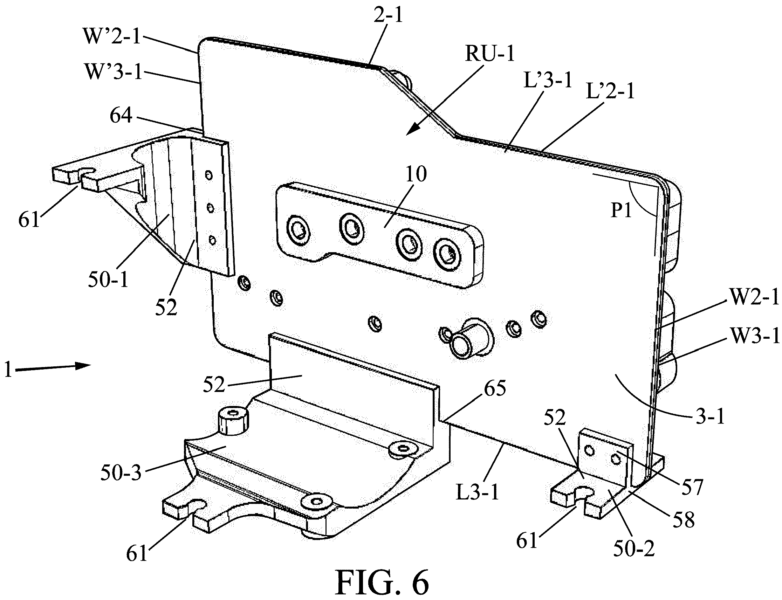

   [Fig. 6] is a perspective view of a refrigerant module according to yet another embodiment of the present disclosure.

### Description of Embodiments

The present invention relates to a refrigerant module for a thermal management system, referred to as 1 in the figures. The refrigerant module comprises a refrigerant unit RU-1, also called first refrigerant unit.

As can be seen from the figures, the first refrigerant unit RU-1 comprises two connected plates, a first plate 2-1 and a second plate 3-1, the two plates facing each other and fixed together. The first plate 2-1 comprises tracks and is later called refrigerant plate 2-1. The second plate 3-1 is essentially flat and is later called back plate 3-1. The refrigerant plate 2-1 and the back plate 3-1 are sealed together to delimit a closed space to form channels 4-1 of the refrigerant module 1.

The channels 4-1 ensure distribution of the refrigerant fluid in components of the thermal management system, like a compressor, heat exchangers, such as an evaporator and/or a chiller and/or a condenser, valves, sensors (not shown).

Different components of the thermal management system can be attached to the refrigerant unit RU like at least: a condenser and/or a water condenser and/or a heat exchanger (evaporator and/or chiller) and/or PT (pressure temperature) sensors, and/or valves and/or AC (air conditioning) lines.

As can be seen from the figures, the refrigerant plate 2-1 and the back plate 3-1 extend longitudinally along planes that are parallel to a plane referred to as P1 in the figures.

In the figures, the refrigerant plate 2-1 (respectively 3-1) of the first refrigerant distribution unit RU-1 extends between a straight width edge W2-1 (respectively W3-1), and a more complex edge W'2-1 (respectively W'3-1). The refrigerant plate 2-1 (respectively 3-1) is also delimited by a straight length edge L2-1 (respectively L3-1) facing an edge L'2-1 (respectively L'3-1) comprising succession of straight edges. Please note that the invention is not limited to this perimeter shape of the refrigerant plate 2-1 and back plate 3-1.

The refrigerant module 1 comprises at least one bracket 50 provided with at least one decoupling element 51. The decoupling element 51 ensures a vibrational decoupling of the thermal management system from the vehicle body. Hence, the propagation of acoustic waves and vibrations from the thermal management system to the cabin of the vehicle is reduced, which improves the comfort of the passengers.

The refrigerant module 1 is configured such that the first refrigerant unit RU-1 and the at least one bracket 50 form a unit frame UF. In other words, the first refrigerant unit RU-1 and the at least one bracket 50 comprise fixations to connect components of the thermal management system. The refrigerant module 1 being a unit frame UF, the thermal management system can be handled as one piece, which is convenient for installing or uninstalling the thermal management system in the vehicle.

In the embodiment illustrated in figures 1 to 4, the refrigerant module 1 comprises two brackets, a first bracket 50-1 and a second bracket 50-2.

The first bracket 50-1 comprises a bracket body 52 extending along and exceeding a width of the back plate 3-1 of the first refrigerant unit RU-1 from a first end 53 to a second end 54. The bracket body 52 is close to the edges W'2-1, W'3-1 of the first refrigerant unit RU-1. The first end 53 is folded perpendicularly relatively to the bracket body 52. The second end 54 comprises two legs 55, each leg comprising a ring 56 supporting one decoupling element 51. The decoupling elements can be of any suitable kind (foam, rubber, ...).

The second bracket 50-2 comprises a bracket body 52 with a part 57 parallel to the edges W2-1 and W3-1 and facing the bracket body 52 of the first bracket 50-1. The bracket body 52 of the second bracket 50-2 also comprises a supporting part 58 extending from a first end (on the back plate side) to a second end (on the refrigerant side) perpendicularly to the plane P1, each end comprising a groove 59 for receiving one decoupling element 51. The decoupling elements can be of any suitable kind (foam, rubber, ...).

The first refrigerant unit RU-1 and each bracket 50 are connected, either by a fixed connection (figure 3) or by a permanent joint (figure 4).

In figure 3, the first refrigerant unit RU-1 and each of the two brackets 50-1, 50-2 are screwed together, the screw points being referred to as 60. According to this alternative, the first refrigerant unit RU-1 and the brackets can be made of different materials. For instance, the first refrigerant unit RU-1 can be made of aluminum while the brackets 50-1, 50-2 can be made of plastic.

In figure 4, the refrigerant module 1 comprises a brazed joint 61 around each of the brackets 50-1, 50-2. According to this alternative, the refrigerant unit RU-1 and the brackets 50-1, 50-2 are preferably made of aluminum, which allows a simple method of manufacturing with the brazing in one step.

The embodiment of figure 5 is now described.

In this figure, the refrigerant module 1 comprises a first refrigerant unit RU-1, and two brackets 50-1, 50-2 as already described in relation with figures 1-4.

The refrigerant module 1 also comprises a second refrigerant unit RU-2. In this illustrated embodiment, the second refrigerant unit RU-2 is smaller than the first refrigerant unit RU-1, although the invention is not limited to this arrangement.

As can be seen from figure 5, the second refrigerant unit RU-2 comprises two connected plates, a first plate 2-2 and a second plate 3-2, the two plates facing each other and fixed together. The first plate 2-2 comprises tracks and is later called refrigerant plate 2-2. The second plate 3-2 is essentially flat and is later called back plate 3-2. The refrigerant plate 2-2 and the back plate 3-2 are sealed together to delimit a closed space to form other channels 4-2 of the refrigerant module 1.

The channels 4-2 ensure distribution of the refrigerant fluid in components of the thermal management system, like a compressor, a heat exchanger, such as an evaporator and/or a chiller and and/or a condenser, valves, sensors (not shown).

As can be seen from the figures, the refrigerant plate 2-2 and the back plate 3-2 extend longitudinally along planes that are parallel to a plane referred to as P2 in the figures. P1 and P2 can respectively be defined as the first refrigerant unit (longitudinal) plane and second refrigerant unit (longitudinal) plane.

The planes P1 and P2 are inclined one to another with an angle referred to as A. This arrangement ensures high compactness of the refrigerant module 1. It also guarantees that the refrigerant module 1 can be adapted to different kinds of vehicle front ends, even for electric vehicles, where the thermal management systems should undergo many constraints relative to the packaging.

Advantageously, the angle A is comprised in the range of values of 45° to 110°, depending on the thermal management system packaging. Preferably, the angle A is 90°, meaning that the planes P1 and P2 are perpendicular.

As can be seen from figure 5, the second refrigerant unit RU-2 comprises an interface 10 to connect the second refrigerant unit RU-2 to the first refrigerant unit RU-1. The interface 10 comprises a rod 11 that has a general shape of a flat parallelepiped, even though the invention is not limited to this configuration.

The rod 11 comprises a front face 12 and a back face 13, the back face 13 being opposite to the front face 12. Each of the front face 12 and the back face 13 is delimited by lengths and widths of the rod 11. The rod 11 is fixed to the two plates 2-2, 3-2 of the first refrigerant unit RU-2, for instance is mounted integrally with the two plates 2-2, 3-2. As can be seen from the figures, the back face 13 of the rod 11 rests against the back plate 3-2 of the second refrigerant unit RU-2.

The rod 11 is provided with openings 18 that are configured to receive channels 4-1 from the first refrigerant unit RU-1 that connect the second refrigerant unit RU-2 and/or channels 4-2 from the second refrigerant unit RU-2 that connect the first refrigerant unit RU-1. Said differently, the first refrigerant unit RU-1 and the second refrigerant unit RU-2 are configured to be directly connected. On the illustrated embodiment, the rod 11 comprises four openings 18.

The first refrigerant unit RU-1 and the second refrigerant unit RU-2 are connected, either by a fixed connection (with screws for instance) or by a permanent joint (with brazing for instance).

As can be seen from figure 5, the bracket body 52 comprises a shoulder 22 resting against the second refrigerant unit RU-2.

In this embodiment, the refrigerant module 1 is configured such that the first refrigerant unit RU-1, the second refrigerant unit RU-2, the first bracket 50-1 and the second bracket 50-2 form a unit frame UF. In other words, the first refrigerant unit RU-1, the second refrigerant unit RU-2, the first bracket 50-1 and the second bracket 50-2 comprise fixations to connect all the components of the thermal management system.

The embodiment of figure 6 is now described.

In this figure, the refrigerant module 1 comprises a first refrigerant unit RU-1 as already described in relation with figures 1-4. The refrigerant module 1 also comprises an interface 10 for receiving a second refrigerant unit. Although not shown, the second refrigerant unit is consistent with its description in relation with figure 5.

As can be seen, the refrigerant module 1 comprises a first bracket 50-1, a second bracket 50-2 and a third bracket 50-3, at least one bracket comprising at least one decoupling element 51. The decoupling elements can be of any suitable kind (foam, rubber, ...).

The first bracket 50-1 comprises a bracket body 52 with a shoulder 64 to receive the edges W'2-1 and W'3-1 of the refrigerant unit RU-1. The bracket body 52 also comprises a groove 61 for receiving one decoupling element 51 (not shown in figure 6). The decoupling elements can be of any suitable kind (foam, rubber, ...).

The second bracket 50-2 comprises a bracket body 52 with a part 57 extending close to the edges W2-1 and W3-1 of the first refrigerant unit RU-1. The bracket body 52 of the second bracket 50-2 also comprises a supporting part 58 extending from a first end (on the back plate side) to a second end (on the refrigerant side), each end comprising a groove 61 for receiving one decoupling element 51 (not shown in figure 6). The decoupling elements can be of any suitable kind (foam, rubber, ...).

The third bracket 50-3 comprises a bracket body 52 with a shoulder 65 to receive the edges L2-1 and L3-1 of the first refrigerant unit RU-1. Ends of the bracket body 52 comprise groove 61 for receiving one decoupling element 51 (not shown in figure 6). The decoupling elements can be of any suitable kind (foam, rubber, ...).

The third bracket 50-3 advantageously comprises an incurved (concave) shape to receive a body of the compressor (not shown).

The number of brackets, their position and shape depend on the number of components of the thermal management system. As already noted, the arrangement of the refrigerant unit(s) with the bracket(s) extends the refrigerant units to a complete unit frame with decoupling function that isolates the module 1 from the vehicle body. All the AC components of the module 1 will be fixed to this "unified body". The module 1 has a high compactness and high stiffness and can be adapted for its integration to different kinds of vehicles. Also, the full module is decoupled, which reduces vibrations for the passengers of the vehicle. The module 1 furthermore allow minimization of material consumption by adding the refrigerant plate as a part of the unit frame.

## Claims

1. Refrigerant module for a thermal management system, comprising a refrigerant unit, called first refrigerant unit (RU-1), of two opposite plates (2-1, 3-1) shaped to constitute channels for distributing refrigerant fluid in said thermal management system, the refrigerant module (1) comprising at least one bracket (50-1, 50-2, 50-3) fixed to the refrigerant unit (RU-1) and provided with at least one decoupling element (51).

2. Refrigerant module according to claim 1, wherein the refrigerant unit (RU-1) and the at least one bracket (50-1, 50-2, 50-3) are configured to form a unit frame (UF) of the thermal management system.

3. Refrigerant module according to claim 1 or claim 2, wherein the at least one bracket (50-1, 50-2, 50-3) is fixed to one (3-1) of the two opposite plates (2-1, 3-1).

4. Refrigerant module according to any of the preceding claims, comprising two brackets (50-1, 50-2), at least one of the brackets provided with at least one decoupling element (51).

5. Refrigerant module according to any of claims 1-3, comprising three brackets (50-1, 50-2, 50-3), at least one of the brackets provided with at least one decoupling element (51).

6. Refrigerant module according to any of the preceding claims, comprising another refrigerant unit (RU-2), called second refrigerant unit, the second refrigerant unit comprising two opposite plates (2-2, 3-2) for distributing refrigerant fluid in said thermal management system, the first refrigerant unit (RU-1) and the second refrigerant unit (RU-2) being fixed together.

7. Refrigerant module according to the preceding claim, wherein the second refrigerant unit (RU-2) is in contact with one bracket (50-1, 50-2, 50-3).

8. Refrigerant module according to claim 6 or claim 7, wherein the second refrigerant unit (RU-2) is disposed inclined relatively to the first refrigerant unit (RU-1), the angle (A) between the first refrigerant unit (RU-1) and the second refrigerant unit (RU-2) being comprised in a range of values of 45° to 110°.

9. Refrigerant module according to any of the preceding claims, wherein the first refrigerant unit (RU-1) and each bracket (50-1, 50-2, 50-3) are screwed together.

10. Refrigerant module according to any of claims 1-8, wherein the first refrigerant unit (RU-1) and each bracket (50-1, 50-2, 50-3) are brazed together.

11. Thermal management system, comprising a refrigerant module (1) according to any of the preceding claims.
